# EUROPÄISCHE PATENTSCHRIFT

(11) **EP 1 404 027 B1**
(45) Veröffentlichungstag und Bekanntmachung des Hinweises auf die Patenterteilung: **05.09.2007**
(21) Anmeldenummer: 03102011.8
(22) Anmeldetag: 04.07.2003
(51) Int. Cl.: H04B 1/16, H04L 12/28

(54) **Verfahren zum Betreiben eines ersten Kurzstreckenfunksende-/-funkempfangsgeräts gemäss einem Kurzstreckenfunkkommunikationsstandard**
Operation method for a short range transmiter and receiver according to a short range communications standard
Procédé d'opération pour un émetteur et un récepteur à courtes distances selon un standard de communications à courtes distances

(30) Priorität: 30.09.2002 DE 10245560
(43) Veröffentlichungstag der Anmeldung: 31.03.2004
(73) Patentinhaber: SIEMENS AKTIENGESELLSCHAFT, 80333 München (DE)
(72) Erfinder: Ratermann, Albert, 46395, Bocholt (DE); Schanzmann, Martin, 44359, Dortmund (DE)

(56) Entgegenhaltungen:
- EP-A- 1 202 495
- GARG S ET AL: "MAC SCHEDULING POLICIES FOR POWER OPTIMIZATION IN BLUETOOTH: A MASTER DRIVEN TDD WIRELESS SYSTEM" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, Bd. VOL. 1 OF 3. CONF. 51, 15. Mai 2000 (2000-05-15), Seiten 196-200, XP000970607 ISBN: 0-7803-5719-1
- CHAKRABORTY I ET AL: "Policies for increasing throughput and decreasing power consumption in bluetooth MAC" PERSONAL WIRELESS COMMUNICATIONS, 2000 IEEE INTERNATIONAL CONFERENCE ON 17-20 DECEMBER 2000, PISCATAWAY, NJ, USA,IEEE, 17. Dezember 2000 (2000-12-17), Seiten 90-94, XP010534019 ISBN: 0-7803-5893-7
- ERICSSON ET AL: "Specification of the Bluetooth System, Version 1.0 B; Part B: Baseband Specification (pages 98-122); Part C: Link Manager Protocol (pages 186-244)" SPECIFICATION OF THE BLUETOOTH SYSTEM, 1. Dezember 1999 (1999-12-01), XP002255785
- ZHANG PEI ET AL: "Bluetooth - the fastest developing wireless technology" COMMUNICATION TECHNOLOGY PROCEEDINGS, 2000. WCC - ICCT 2000. INTERNATIONAL CONFERENCE ON BEIJING, CHINA 21-25 AUG. 2000, PISCATAWAY, NJ, USA,IEEE, US, Bd. 2, 21. August 2000 (2000-08-21), Seiten 1657-1664, XP010526681 ISBN: 0-7803-6394-9

## Beschreibung

Die Erfindung betrifft ein Verfahren zum Betreiben eines ersten Kurzstreckenfunksende-/-funkempfangsgeräts gemäß einem Kurzstreckenfunkkommunikationsstandard gemäß dem Oberbegriff des Anspruchs 1.

Der "Bluetooth-Standard" ist ein Kurzstreckenfunkstandard, der mit Trägerfrequenzen aus dem weltweit nicht lizenzierten "Industrial-", "Scientific-", "Medical" 2,4 GHz Band (ISM-Band) funktioniert und eine drahtlose Verbindung von Endgeräten (Devices) in einer Funkzelle mit einem Radius bis zu 10 Metern, in besonderen Fällen sogar bis über 100 Metern, ermöglicht, wobei die Trägerfrequenzen, um Funkinterferenzen zu verhindern, in einer (pseudo-)zufälligen Reihenfolge bis 1600mal pro Sekunde gewechselt werden. Für dieses Frequenzsprungverfahren "Frequency Hopping" sind bis zu 79 Frequenzen (Kanäle) im Bereich zwischen 2,402 und 2,480 GHz vorgesehen.

Bis zu acht nach dem Bluetooth-Standard funktionierende Devices können in der - auch als "Pico-Zelle" bezeichneten - Funkzelle zu einem sogenannten "Pico-Netz" zusammengeschlossen werden und miteinander kommunizieren, wobei die einzelnen Devices - durch Zeitmultiplexverfahren realisiert - Mitglieder mehrerer Pico-Netze sein können, so dass diese Pico-Netze dadurch zu einem sogenannten "Scatter-Netz" verbunden sind.

Jedes Device in einem Pico-Netz, kann dieses Pico-Netz initialisieren. Ein Device, das ein Pico-Netz initialisiert hat, kontrolliert die restlichen Mitglieder des Pico-Netzes und synchronisiert deren Timer, daher wird es mit "Master" bezeichnet, während die verbleibenden Mitglieder des Pico-Netzes mit "Slaves" bezeichnet werden.

Devices, die Mitglieder mehrerer Pico-Netze sind und diese Pico-Netze, die sich durch unterschiedliche Hopping-Kanal Folgen unterscheiden lassen, zu Scatter-Netzen vereinen, synchronisieren sich in jedem Multiplex-Zeitschlitz auf den jeweils aktuellen Master auf.

Bevor sie eine Verbindung im Pico-Netz aufbauen, befinden sich Bluetooth Geräte in einem Stromsparmodus "Standby-Modus". Dabei suchen nicht verbundene Geräte alle 1,28 Sekunden nach eventuellen Netznachrichten.

Neben dem Standby-Modus ohne Netzverbindung ist noch eine Reihe weiterer Stromsparfunktionen möglich. Im "Hold-Modus" bleibt das Gerät in das Pico-Netz integriert, es werden aber keine Daten übertragen. Lediglich ein interner Timer läuft im Slave weiter. Bei Bedarf startet die Datenübertragung verzögerungsfrei. Der Hold-Modus kann vom Master für den Slave angeordnet werden. Anderseits kann der Slave den Master auffordern, ihn in diesen Modus zu schalten.

Im "Sniff-Modus" lauscht das Gerät in programmierbaren Abständen in das Netz. Auch hier läuft der Timer zur Synchronisation im Slave weiter.

Weiterhin lassen sich Geräte im Netz parken ("Park-Modus"). Hierbei verliert das Gerät seine Adresse im Netz, kann den Netzverkehr also nur mehr mit verfolgen und synchronisiert in größeren Abständen seinen internen Timer mit dem des Masters.

Nachteilig ist jedoch, dass die genannten Stromsparmodi zwar gemäß dem Bluetooth-Standard vorgesehen sind, ihre Nutzung nicht zwingend vorgeschrieben und die Bedingungen, die zu einer Aktivierung eines der genutzten Stromsparmodi führt, nicht festgelegt sind, so dass Stromspareffekt in einem heterogenen Umfeld mit Bluetooth-Endgeräten verschiedener Hersteller häufig gar nicht oder nur in geringem Maße erzielt werden kann.

In Dokument "MAC Scheduling Policies for Power Optimization in Bluetooth: A Master Driven TDD Wireless System", von GARG S. et Al. (15.05.2000) werden verschiedene Strategien vorgestellt, um einen Strompsparmodus festzulegen.

Die der Erfindung zugrundeliegende Aufgabe ist es, ein Verfahren anzugeben, welches einem gemäß einem Kurzstreckenfunkstandard, insbesondere dem Bluetooth-Standard, funktionierenden Kurzstreckenfunksende-/-funkempfangsgerät ein effektives Energiesparen ermöglicht.

Diese Aufgabe wird ausgehend von dem Verfahren gemäß dem Oberbegriff des Anspruchs 1 durch dessen kennzeichnende Merkmale gelöst.

Bei dem erfindungsgemäßen Verfahren zum Betreiben eines ersten Kurzstreckenfunksende-/-funkempfangsgeräts gemäß einem Kurzstreckenfunkkommunikationsstandard, insbesondere dem "Bluetooth"-Standard, aufweisend mindestens zwei Stromsparmodi, deren Verwendung gemäß dem Kurzstreckenfunkkommunikationsstandard optional ist, ist die Nutzung des durch das erste Kurzstreckenfunksende-/-funkempfangsgerät verwendeten Stromsparmodi priorisierbar. Des Weiteren wird für eine Kommunikationsverbindung mit einem zweiten Kurzstreckenfunksende-/funkempfangsgerät zumindest ein durch das zweite Kommunikationsgerät verwendeter Stromsparmodus ermittelt, so dass für die Kommunikationsverbindung derjenige Stromsparmodus aus der Schnittmenge der sowohl durch das erste als auch zweite Kurzstreckenfunksende-/-funkempfangsgerät verwendeten Stromsparmodi genutzt wird, der seitens des ersten Kurzstreckenfunksende-/-funkempfangsgeräts die Höchste Priorität aufweist.

Durch das erfindungsgemäße Verfahren ist ein das Verfahren einsetzende Kurzstreckenfunksende-/-funkempfangsgerät in der Lage, die Stromsparmodi zu nutzen, so dass sich die Wahrscheinlichkeit erhöht, dass zumindest eines der Stromsparmodi auch wirklich aktiviert wird. Zudem ermöglicht es auch anderen, das erfindungsgemäße Verfahren nicht einsetzenden Geräten, die Wahrscheinlichkeit zu erhöhen, dass zumindest eines ihrer Stromsparmodi aktiviert wird, so dass einem gemäß Kurzstreckenfunkstandard funktionierenden System, eine effektivere Nutzung vorhandener Stromsparmöglichkeiten ermöglicht wird. Durch die Priorisierbarkeit der Stromsparmodi, die im das erfindungsgemäße Verfahren einsetzenden Kurzstreckenfunksende-/-funkempfangsgerät genutzt werden, wird zudem gewährleistet, dass im Wesentlichen nur bevorzugte Stromsparmodi genutzt werden.

Vorzugsweise erfolgt die Ermittlung der durch das zweite Kurzstreckenfunksende-/-funkempfangsgerät verwendeten Stromsparmodi beim Aufbau der Kommunikationsverbindung, so dass schon vom ersten Augenblick an die Aktivierung eines der Stromsparmodi möglich ist. Ein weiter Vorteil ist, dass für die Ermittlung die zum Aufbauzeitpunkt ausgetauschten Nutzdatenpakete genutzt werden können, in dem beispielsweise gemäß Kurzstreckenfunkstandard ungenutzte Bits zur Signalisierung verwendeter Stromsparmodi gesetzt werden oder gemäß Kurzstreckenfunkstandard für eine derartige Signalisierung definierte Steuerdaten ausgetauscht und ausgewertet werden.

Erfolgt die Ermittlung des Stromsparmodus derart, dass durch das erste Kurzstreckenfunksende-/-funkempfangsgerät beginnend mit dem Stromsparmodus mit der höchsten Priorität eine Anfrage erfolgt, ob der Stromsparmodus seitens des zweiten Kurzstreckenfunksende-/-funkempfangsgeräts verwendet wird, wobei bei positivem Ergebnis der Stromsparmodus für die Kommunikationsverbindung genutzt und bei negativem Ergebnis der Schritt a) mit dem gemäß Reihenfolge der Priorisierung nächsten Stromsparmodus wiederholt wird, erreicht man eine sehr schnelle Umsetzung der Ermittlung eines gemeinsam genutzten Stromsparmodus, da bei einem positiven Ergebnis evtl. verbleibende Stromsparmodi nicht mehr abgefragt werden müssen.

Wird die Reihenfolge der abzufragenden Stromsparmodi während der Kommunikationsverbindung als Liste geführt und bei negativem Ergebnis der Anfrage der betreffende Stromsparmodus aus der Liste gestrichen, können die Ermittlungsergebnisse geeignet, beispielsweise für eine zu einem späteren Zeitpunkt folgenden Verwertung, gesichert werden.

Bei einer alternativen Weiterbildung wird die Reihenfolge der abzufragenden Stromsparmodi während der Kommunikationsverbindung als Liste geführt, wobei unabhängig vom Ergebnis der Ermittlung der Reihe nach eine Anfrage jedes Stromsparmodus der Liste erfolgt und bei jedem negativen Ergebnis der Anfrage der betreffende Stromsparmodus aus der Liste gestrichen wird.

Bevorzugt eingesetzt wird diese Weiterbildung, wenn eine besonders schnelle Ermittlung nicht gefragt ist, sondern vielmehr eine genaue Kenntnis aller gemeinsam mit dem zweiten Kurzstreckenfunksende-/-funkempfangsgerät verwendeten Stromsparmodi erforderlich ist. Dies ist beispielsweise vorteilhaft, wenn mehrere Stromsparmodi zur Realisierung einer abgestuften Abschaltung energieverbrauchender Einheiten eines Kurzstreckenfunksende-/-funkempfangsgeräts notwendig sind und es daher notwendig ist zu wissen, ob diese Stromsparmodi Teil der Schnittmenge gemeinsam genutzter Stromsparmodi ist.

Erfolgt die Ermittlung für jede neue Kommunikationsverbindung, kann auf veränderte Bedingungen reagiert werden. Beispielsweise ist es denkbar, dass Stromsparmodi des zweiten Kurzstreckenfunksende-/-funkempfangsgerätes vom Nutzer oder einer anderen Instanz vorübergehend ausgeschaltet werden. Mit dieser Weiterbildung wird auch dem Umstand Rechnung getragen, dass bei einer neuen Kommunikationsverbindung auch ein neuer Kommunikationspartner, d.h. ein neues zweites Kurzstreckenfunksende-/-funkempfangsgerät, beteiligt ist, der andere Stromsparmodi verwendet.

Alternativ oder ergänzend wird im Rahmen des Aufbaus der Kommunikationsverbindung eine das zweite Kurzstreckenfunksende-/-funkempfangsgerät eindeutig identifizierende Information an das erste Kurzstreckenfunksende-/-funkempfangsgerät übermittelt, sowie eine Zuordnungsinformation von identifizierender Information zu der Liste im ersten Kurzstreckenfunksende-/-funkempfangsgerät gespeichert, so dass bei erneuten Verbindungen mit demselben Kommunikationspartner auf zuvor ermittelte Informationen zurückgegriffen werden kann. Mit dieser Weiterbildung lässt sich daher verbesserte Ausnutzung der Ressourcen gewährleisten.

Bei einer Weiterbildung erfolgt eine Aktivierung des ermittelten Stromsparmodus bei Detektion eines Ausbleibens von Datenverkehr auf der Kommunikationsverbindung, wobei die Detektion seitens des ersten Kurzstreckenfunksende-/-funkempfangsgeräts durchgeführt wird, da ein Ausbleiben von Datenverkehr ein Indikator für eine mangelnde Auslastung der aktuellen Kommunikationsverbindung ist. Vorzugsweise wird dabei das Detektieren periodisch in Intervallen initiiert, wobei bei einer vorteilhaften Weiterbildung die Dauer des Intervalls durch eine konfigurierbare Variable festlegbar ist, so dass ein Nutzer bzw. Betreiber des Kurzstreckenfunksend-/-funkempfangsgeräts und/oder der Hersteller die Intervalle beispielsweise im Rahmen einer Optimierung variieren kann.

Weitere Vorteile und Einzelheiten der Erfindung werden anhand der Figuren erläutert. Es zeigt die
- Figur 1: eine schematische Darstellung des Protokoll-Stacks
- Figur 2: eine schematische Darstellung des Ablaufs des Verfahrens

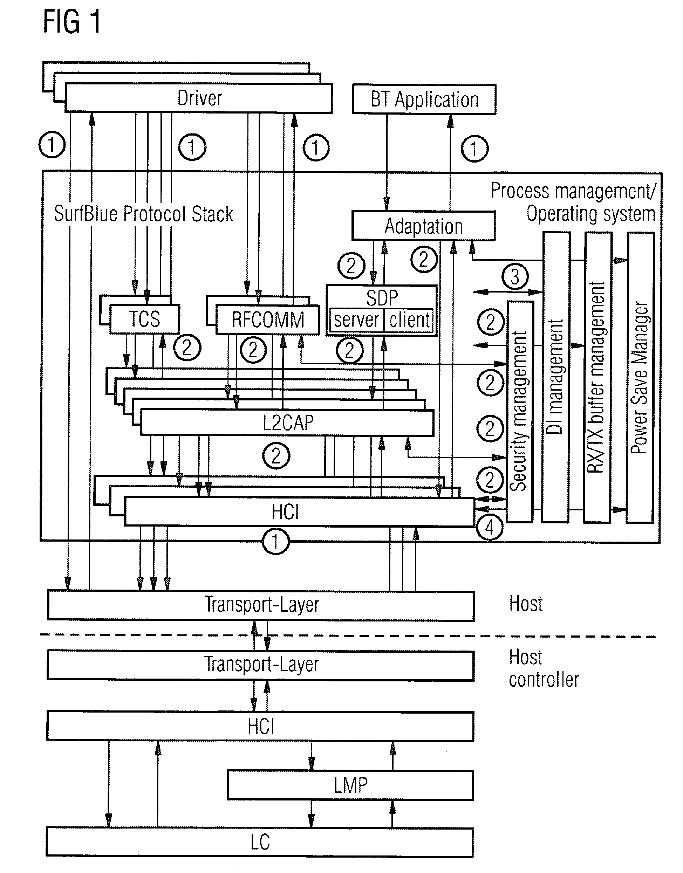

In der Figur 1 sind Funktionseinheiten von einem das erfindungsgemäße Verfahren ausführenden "Protocol Stack" (Stack) SURFBLUE dargestellt, wobei allgemein unter einem "Protocol Stack" eine Protokollsoftware verstanden wird für benachbarte, in Abhängigkeit stehende Schichten des OSI Referenzmodells, die funktional zusammengehören. Sie dient im Allgemeinen der Implementierung spezieller Netzwerkarchitekturen.

Die Architektur des dargestellten Stacks SURFBLUE ist in einem ein Bluetoothmodul aufnehmenden Wirt HOST implementiert und kommuniziert mit anderen Schichten (Applikations- und Transportschicht) bzw. ihnen zugeordneten Einheiten BT-APPLIKATION, DRIVER, TRANSPORT-LAYER über eine hierfür vorgesehene externe Schnittstelle 1.

Der Stack SURFBLUE weist mehrere Protokolle auf. Eines gemäß Bluetooth Standard vorgegebene Protokoll (Core Protocol), ist das "Logical Link Control and Adaptation Protocol" L2CAP, welches für aufsetzbare Protokolle verbindungsorientierte und verbindungslose (loopback) Verbindungen für höhere Protokollschichten.

Das logische Verbindungskontroll- und Anpassungs-Protokoll L2CAP weist über eine interne Schnittstelle 2 Verbindung zu einer Telefonkontroll-Protokoll-Spezifikation ("Telephony Control protocol Specification") TCS auf. Die Telefonkontroll-Protokoll-Spezifikation TCS umfasst im Allgemeinen zum einen ein bitorientiertes Protokoll, dass eine Rufkontrolle, Verbindungsaufbau, Sprachübertragung sowie Datenübertragung realisiert, und zum anderen setzt es AT-Befehle für Handys und Modems, zu deren Steuerung oder für eine Art FAX - Übertragung ab.

Das logische Verbindungskontroll- und Anpassungsprotokoll L2CAP ist über die interne Schnittstelle 2 zudem mit einem seriellen Kabelemulationsprotokoll RFCOMM verbunden, welches gemäß ETSI ZS 07.10 definiert ist und oberhalb des logischen Verbindungskontroll- und Anpassungsprotokolls L2CAP zur Emulation einer RS232 Verbindung wie ETSI TS 07.10 bei GSM, z.B. zur direkten Steuerung über AT Kommandos, dient.

Des weiteren weist das logische Verbindungskontroll- und Anpassungsprotokoll L2CAP über die interne Schnittstelle 2 eine Verbindung zu einem Lokalisierungs-Protokoll (Service Discovery Protocol) SDP auf, welches für die Lokalisierung der von Bluetooth-Geräten in Funkreichweite angebotenen Dienste zuständig ist und seinerseits über die interne Schnittstelle 2 mit der Anpassungsschicht ADAPTION des OSI Referenzmodells kommuniziert.

Das logische Verbindungskontroll- und Anpassungsprotokoll L2CAP kommuniziert darüber hinaus auch mit einer Wirtrechner-Kontroller-Schnittstelle (Host Controller Interface) HCI, welche notwendig ist, wenn ein Bluetooth Gerät über den Wirt HOST gesteuert wird.

Zu diesem Zweck kommuniziert die Wirtrechner-Kontroller-Schnittstelle HCI mit einer Vielzahl der beschriebenen Protokolle und Schichten, wie beispielsweise der Anpassungsschicht ADAPTION - über die interne Schnittstelle 2 - oder der Transportschicht TRANSPORT-LAYER - über die externe Schnittstelle 1.

Zur Umsetzung eines Prozessmanagements bzw. zum Betrieb des Stacks SURFBLUE weist der Stack SURFBLUE einige weitere Module auf, wie zum Beispiel das Modul zur Umsetzung von sicherheitsrelevanten Prozessen SECURITY-MANAGEMENT, welches über die interne Schnittstelle hierzu zumindest mit dem logischen Verbindungskontroll- und Anpassungsprotokoll L2CAP, dem Lokalisierungsprotokoll SDP sowie der Wirtrechner-Kontroller-Schnittstelle HCI verbunden ist, das Modul zur Umsetzung eines Gerätemanagements (Device Interface management) DI-MANAGEMENT sowie ein Modul für die Umsetzung eines Empfangs-/Sendepuffer Managements RX/TX-BUFFER-MANAGEMENT.

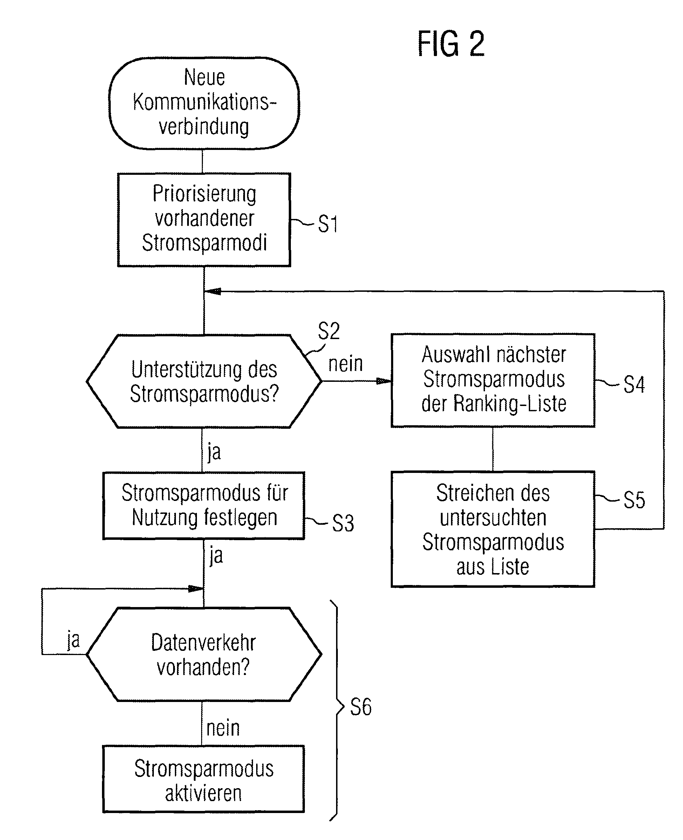

Darüber hinaus weist das Protokollstack SURFBLUE eine zur Umsetzung des erfindungsgemäßen Verfahrens ausgestaltete Energiesparsteuereinrichtung POWER-SAVE-MANAGEMENT auf, die zumindest mit der Anpassungsschicht ADAPTION über eine eigene Anpassungsschicht-Powermanagement Schnittstelle 3 und der Wirtrechner-Kontroller-Schnittstelle über eine Wirtrechner-Kontroller-Schnittstelle-Powermanagementschnittstelle HCI zur Umsetzung des in der Figur 2 gezeigten Ausführungsbeispiels des erfindungsgemäßen Verfahrens verbunden ist.

In Figur 2 ist als Ablaufdiagramm ein Ausführungsbeispiel des erfindungsgemäßen Verfahrens dargestellt, welches vorzugsweise in der oben beschriebenen Protokollstackarchitektur SURFBLUE implementiert ist.

Die erfindungsgemäße Prozedur innerhalb des Stacks SURFBLUE, welcher für die oberen Bluetooth-Layer entwickelt wurde, realisiert ein Konzept, das es ermöglicht, die seitens eines Herstellers oder eines Nutzers erwünschten PowerSave-Modi eines Bluetoothendgerätes in einer geordneten und vorher festgelegten Reihenfolge (Ranking) zu schalten.

Hierzu wird in einem ersten Schritt S1 für jeden von einem das erfindungsgemäße Verfahren implementierenden Bluetoothgerät unterstützen Stromsparmodus ein Prioritätswert gesetzt, der eine Reihenfolge aller Stromsparmodi festlegt. Dieser Schritt erfolgt dynamisch, kann also für jede laufende Bluetooth-Verbindung neu eingestellt werden. Alternativ ist es auch möglich, diese Priorisierung grundsätzlich derart variabel zu gestalten, dass ein Nutzer des Gerätes hierauf Einfluss nehmen kann. Es ist auch denkbar, das diese Priorisierung einmalig bei der Herstellung erfolgt.

In einem zweiten Schritt S2 wird dynamisch, d.h. zur Laufzeit einer Bluetooth-Verbindung mit einem zweiten Bluetoothendgerät hierzu abgefragt, ob der im Ranking höchste eingetragene Modus seitens des zweiten Bluetoothendgerätes unterstützt wird, wobei die Abfragung der von der Gegenseite unterstützten Modi bei Verbindungsaufbau erfolgt.

Ist dies der Fall, wird der betreffende Stromsparmodus in einem dritten Schritt S3 als nutzbarer Stromsparmodus festgelegt.

Ergibt die Anfrage im zweiten Schritt S2, dass der angefragte Stromsparmodus nicht unterstützt wird, wird in einem vierten Schritt S4 auf den im Ranking nächstgelegenen Stromsparmodus zurückgegriffen, bis ein Stromsparmodus festgelegt worden ist bzw. bei leerer Schnittmenge für die Verbindung eine Funktion ohne Stromsparmöglichkeit festgelegt wird.

Hierbei wird in einem fünften Schritt S5 der nicht unterstützte Modus im Ranking ausgetragen.

Ist ein Stromsparmodus festgelegt, wird in einem sechsten Schritt S6 der Stromsparmodus aktiviert, sobald kein Datenverkehr auf der Verbindung vorhanden ist, wobei eine Triggerung zur Abfrage, ob Datenverkehr herrscht, zeitlich gesteuert über eine konfigurierbare Variable erfolgen kann.

Dieser Vorgang wird für jede neu Kommunikationsverbindung wiederholt. Denkbar ist aber auch, dass für jeden Kommunikationspartner, dessen Identität bekannt ist, beim ersten Bluetoothgerät eine Zuordnung gespeichert ist, die die in Verbindung mit dem Kommunikationspartner als nutzbar detektierten Stromsparmodi wiedergibt, so dass bei folgenden Verbindungen mit diesen Kommunikationspartnern ein erneutes Detektieren entfallen kann und der in der Zuordnung (Liste) gespeicherte Stromsparmodus mit dem höchsten Ranking automatisch festgelegt wird.

Ein wesentlicher Vorteil des erfindungsgemäßen Verfahrens ist, dass durch das Ranking individuell für jede Bluetooth-Verbindung eingestellt werden kann, ob und welche StromsparModi eingeschaltet werden. Dadurch wird sowohl der Vielfalt der Bluetooth- Geräte (PC, Handy, PDA, Drucker etc.) als auch der bisher noch nicht durchgehenden Unterstützung der Stromsparmodi bei verschiedenen Chip-Herstellern Rechnung getragen. Einmal eingestellt, übernimmt das im Protokollstack SURFBLUE implementierte Verfahren, gesteuert durch das Energiesparsteuermodul POWER-SAVE-MANAGEMENT selbstständig die Verwaltung der verschiedenen Modi.

## Patentansprüche

1. Verfahren zum Betreiben eines ersten Kurzstrecken-Funksende-/-Funkempfangsgeräts gemäß einem Kurzstreckenfunkkommunikationsstandard, insbesondere dem "Bluetooth"-Standard, aufweisend mindestens zwei Stromsparmodi, deren Verwendung gemäß dem Kurzstreckenfunkkommunikationsstandard optional ist, **dadurch gekennzeichnet, dass**
a) die Nutzung der durch das erste Kurzstreckenfunksende-/-funkempfangsgerät vorhandenen Stromsparmodi priorisiert wird,
b) für eine Kommunikationsverbindung mit einem zweiten Kurzstreckenfunksende-/-funkempfangsgerät zumindest ein durch das zweite Kommunikationsgerät unterstützter Stromsparmodus ermittelt wird,
c) für die Kommunikationsverbindung derjenige Stromsparmodus aus der Schnittmenge der sowohl durch das erste als auch zweite Kurzstreckenfunksende-/-funkempfangsgerät unterstützten Stromsparmodi genutzt wird, der seitens des ersten Kurzstreckenfunksende-/-funkempfangsgerätes die höchste Priorität aufweist.

2. Verfahren nach Anspruch 1, **dadurch gekennzeichnet, dass** die Ermittlung der durch das zweite Kurzstreckenfunksende-/-funkempfangsgerät unterstützten Stromsparmodi beim Aufbau der Kommunikationsverbindung erfolgt.

3. Verfahren nach Anspruch 1 oder 2, **dadurch gekennzeichnet, dass**
a) die Ermittlung des Stromsparmodus derart erfolgt, dass durch das erste Kurzstreckenfunksende-/-funkempfangsgerät beginnend mit dem Stromsparmodus mit der höchsten Priorität eine Anfrage erfolgt, ob der Stromsparmodus seitens des zweiten Kurzstreckenfunksende-/-funkempfangsgeräts unterstüzt wird,
b) bei positivem Ergebnis der Stromsparmodus für die Kommunikationsverbindung genutzt wird,
c) bei negativem Ergebnis der Schritt a) mit dem gemäß Reihenfolge der Priorisierung nächsten Stromsparmodus wiederholt wird.

4. Verfahren nach Anspruch 3, **dadurch gekennzeichnet, dass**
a) die Reihenfolge der abzufragenden Stromsparmodi während der Kommunikationsverbindung als Liste geführt wird,
b) bei negativem Ergebnis der Anfrage der betreffende Stromsparmodus aus der Liste gestrichen wird.

5. Verfahren nach Anspruch 1 oder 2, **dadurch gekennzeichnet, dass**
a) die Reihenfolge der abzufragenden Stromsparmodi während der Kommunikationsverbindung als Liste geführt wird,
b) unabhängig vom Ergebnis der Ermittlung der Reihe nach eine Anfrage jedes Stromsparmodus der Liste erfolgt,
c) wobei bei jedem negativen Ergebnis der Anfrage der betreffende Stromsparmodus aus der Liste gestrichen wird.

6. Verfahren nach einem der vorhergehenden Ansprüche, **dadurch gekennzeichnet, dass** die Ermittlung für jede neue Kommunikationsverbindung durchgeführt wird.

7. Verfahren nach einem der Ansprüche 1 bis 5, **dadurch gekennzeichnet, dass**
a) im Rahmen des Aufbaus der Kommunikationsverbindung eine das zweite Kurzstreckenfunksende-/-funkempfangsgerät eindeutig identifizierende Information an das erste Kurzstreckenfunksende-/-funkempfangsgerät übermittelt wird,
b) eine Zuordnungsinformation von identifizierender Information zu der Liste im ersten Kurzstreckenfunksende-/-funkempfangsgerät gespeichert wird.

8. Verfahren nach einem der vorhergehenden Ansprüche, **dadurch gekennzeichnet, dass** eine Aktivierung des ermittelten Stromsparmodus bei Detektion eines Ausbleibens von Datenverkehr auf der Kommunikationsverbindung erfolgt, wobei die Detektion seitens des ersten Kurzstreckenfunksende-/-funkempfangsgerätes erfolgt.

9. Verfahren nach Anspruch 8, **dadurch gekennzeichnet, dass** die Detektion periodisch in Intervallen initiiert wird.

10. Verfahren nach Anspruch 9, **dadurch gekennzeichnet, dass** die Dauer der Intervalle durch eine konfigurierbare Variable festlegbar ist.

## Claims

1. Method for operating a first short-range radio transmitting/radio receiving device conforming to a short-range radio communication standard, in particular the "Bluetooth" standard, having at least two power-saving modes the use of which is optional according to the short-range radio communication standard, **characterised in that**
a) the use of the power-saving modes available in the first short-range radio transmitting/radio receiving device is prioritised,
b) for the purpose of a communication connection to a second short-range radio transmitting/radio receiving device, at least one power-saving mode supported by the second communication device is determined,
c) the power-saving mode from the intersection of the power-saving modes supported by the first and the second short-range radio transmitting/radio receiving devices which has the highest priority on the first short-range radio transmitting/radio receiving device side is used for the communication connection.

2. Method according to claim 1, **characterised in that** the power-saving modes supported by the second short-range radio transmitting/radio receiving device are determined during the establishment of the communication connection.

3. Method according to claim 1 or 2, **characterised in that**
a) the power-saving mode is determined in such a way that the first short-range radio transmitting/radio receiving device submits a query, starting with the power-saving mode with the highest priority, to determine whether the power-saving mode is supported by the second short-range radio transmitting/radio receiving device,
b) if the result is positive, said power-saving mode is used for the communication connection,
c) if the result is negative, step a) is repeated with the next power-saving mode according to the order of prioritisation.

4. Method according to claim 3, **characterised in that**
a) the order of the power-saving modes to be queried during the communication connection is maintained as a list,
b) if the result of the query is negative, the relevant power-saving mode is deleted from the list.

5. Method according to claim 1 or 2, **characterised in that**
a) the order of the power-saving modes to be queried during the communication connection is maintained as a list,
b) irrespective of the result of the determination, each power-saving mode in the list is queried in turn,
c) with the relevant power-saving mode being deleted from the list each time the result of the query is negative.

6. Method according to one of the preceding claims, **characterised in that** the determination of the power-saving modes is performed for each new communication connection.

7. Method according to one of claims 1 to 5, **characterised in that**
a) during the establishment of the communication connection, information uniquely identifying the second short-range radio transmitting/radio receiving device is transmitted to the first short-range radio transmitting/radio receiving device,
b) assignment information of identifying information is stored in addition to the list in the first short-range radio transmitting/radio receiving device.

8. Method according to one of the preceding claims, **characterised in that** the determined power-saving mode is activated when an absence of data traffic on the communication connection is detected, the detection being performed by the first short-range radio transmitting/radio receiving device.

9. Method according to claim 8, **characterised in that** the detection is initiated periodically at intervals.

10. Method according to claim 9, **characterised in that** the duration of the intervals can be specified by means of a configurable variable.

## Revendications

1. Procédé pour exploiter un premier émetteur/récepteur radio à courte distance selon un standard de radiocommunication à courte distance, en particulier le standard "Bluetooth", présentant au moins deux modes d'économie de courant, dont l'utilisation selon le standard de radiocommunication à courte distance est optionnelle, **caractérisé en ce que**
a) l'utilisation des modes d'économie de courant présents grâce au premier émetteur/récepteur radio à courte distance est mise en priorité,
b) pour une liaison de communication avec un second émetteur/récepteur radio, on détermine au moins un mode d'économie de courant supporté par le second appareil de communication,
c) pour la liaison de communication, on utilise le mode d'économie de courant provenant de l'ensemble d'intersection des modes d'économie de courant supportés aussi bien par le premier que par le second émetteurs/récepteurs radio à courte distance qui présente la priorité maximale du côté du premier émetteur/récepteur radio à courte distance.

2. Procédé selon la revendication 1, **caractérisé en ce que** la détermination des modes d'économie de courant supportés par le second émetteur/récepteur radio à courte distance s'effectue lors de l'établissement de la liaison de communication.

3. Procédé selon la revendication 1 ou 2, **caractérisé en ce que**
a) la détermination du mode d'économie de courant s'effectue de telle sorte que le premier émetteur/récepteur radio à courte distance effectue une demande, en commençant avec le mode d'économie de courant avec la priorité maximale, pour savoir si le mode d'économie de courant est supporté du côté du second émetteur/récepteur radio à courte distance,
b) en cas de résultat positif, le mode d'économie de courant est utilisé pour la liaison de communication,
c) en cas de résultat négatif, l'étape a) est répétée avec le mode d'économie de courant le plus proche selon l'ordre de succession de priorité.

4. Procédé selon la revendication 3, **caractérisé en ce que**
a) l'ordre de succession des modes d'économie de courant à interroger est géré pendant la liaison de communication sous la forme de liste,
b) en cas de résultat négatif de la demande, le mode d'économie de courant concerné est rayé de la liste.

5. Procédé selon la revendication 1 ou 2, **caractérisé en ce que**
a) l'ordre de succession des modes d'économie de courant à interroger est géré sous forme de liste pendant la liaison de communication,
b) indépendamment du résultat de la détermination, une demande est effectuée dans l'ordre pour chaque mode d'économie de courant de la liste,
c) lors de chaque résultat négatif de la demande, le mode d'économie de courant concerné est supprimé de la liste.

6. Procédé selon l'une quelconque des revendications précédentes, **caractérisé en ce que** la détermination est faite pour chaque nouvelle liaison de communication.

7. Procédé selon l'une quelconque des revendications 1 à 5, **caractérisé en ce que**
a) dans le cadre de l'établissement de la liaison de communication, une information identifiant clairement le second émetteur/récepteur radio à courte distance est transmise au premier émetteur/récepteur radio à courte distance,
b) une information d'attribution d'information identifiante pour la liste est mémorisée dans le premier émetteur/récepteur radio à courte distance.

8. Procédé selon l'une quelconque des revendications précédentes, **caractérisé en ce qu'**une activation du mode d'économie de courant déterminé s'effectue en cas de détection d'une absence de trafic de données sur la liaison de communication, la détection étant effectuée par le premier émetteur/récepteur radio à courte distance.

9. Procédé selon la revendication 8, **caractérisé en ce que** la détection est activée de façon périodique à des intervalles.

10. Procédé selon la revendication 9, **caractérisé en ce que** la durée des intervalles peut être définie par une variable configurable.
